# EUROPEAN PATENT APPLICATION

(11) **EP 4 790 657 A1**
(43) Date of publication of application: **12.08.2026**
(21) Application number: 25156145.2
(22) Date of filing: 06.02.2025
(51) Int. Cl.: G06V 10/80, G06V 10/82, G06V 10/70, G06V 20/56

(54) **A COMPUTER-IMPLEMENTED METHOD FOR SENSOR DATA PROCESSING IN A VEHICLE**

(71) Applicant: Zenseact AB, 417 56 Göteborg (SE)
(72) Inventor: VERBEKE, Willem, 412 59 Göteborg (SE); JOHNANDER, Joakim, 587 37 Linköping (SE)
(74) Representative: Zacco Sweden AB

(57) **Abstract**

The herein disclosed technology relates to a computer-implemented method (100) for processing sensor data in a vehicle equipped with an automated driving system. The method (100) comprising: obtaining (S106) one or more pre-processed representation of sensor data pertaining to a surrounding environment of the vehicle at a current time instance, wherein the sensor data comprises sensor data associated with one or more sensors of the vehicle; obtaining (S108) a plurality of fusion experts, wherein the fusion experts of the plurality of fusion experts differ from each other in one or more aspects; processing (S110) the one or more pre-processed representations of the sensor data and/or a fused world-view representation for a previous time instance as input to a fusion gating module, to generate a selected subset of fusion experts from the plurality of fusion experts based on an output of the fusion gating module; processing (S112) the pre-processed representations of the sensor data together with the fused world-view representation of the previous time instance through each fusion expert of the selected subset of fusion experts, to generate a respective output; and providing (S114) an updated fused world-view representation for the current time instance based on the outputs of the subset of fusion experts.

## Description

### TECHNICAL FIELD

The present disclosed technology relates to the field of automated driving systems. In particular, it is related to methods and devices for processing sensor data in a vehicle equipped with an automated driving system.

### BACKGROUND

Automated driving systems rely heavily on sensor data to perceive and interpret their surroundings accurately. Various sensors, such as LiDAR, radar, and cameras, generate vast amounts of data that must be processed in real-time to ensure reliable and well-performing operation. A challenge in autonomous (or semi-autonomous) vehicle perception is balancing the need for highly complex models capable of handling diverse driving scenarios with the limited computational resources available in the vehicle.

A well-established trend in deep learning is that larger models, trained on sufficient data, outperform smaller models across a wide range of applications. This principle also applies to perception models of automated driving systems, where deep neural networks are used to analyze sensor data for tasks such as object detection, lane recognition, and obstacle avoidance. The real world presents a quasi-infinite number of scenarios, requiring these models to generalize across different weather conditions, lighting variations, road geometries, and object types. For example, a LiDAR-based object detection model trained only in clear weather may struggle in rainy conditions due to changes in point cloud density and reflection patterns. Similarly, recognizing different object classes, such as a moose versus a truck, necessitates diverse model parameters to account for varying shapes, textures, and movement patterns.

Despite the advantages of large models, in-vehicle computing power is inherently constrained by hardware limitations, power consumption concerns, and real-time processing requirements. Unlike cloud-based systems, which can leverage extensive computational resources, in-car inference must be efficient enough to operate within the available processing budget. Running large models in a resource-limited environment can lead to latency issues, increased energy consumption, and impractical hardware costs. As a result, autonomous vehicle developers face a fundamental trade-off: larger models improve performance but exceed available compute resources, while smaller models are more computationally feasible but struggle with robustness and adaptability across diverse driving conditions.

There is therefore a need for improved techniques for processing sensor data in autonomous vehicles, enabling more efficient use of computational resources without compromising model accuracy and robustness, while balancing between model size and computational efficiency.

### SUMMARY

The herein disclosed technology seeks to mitigate, alleviate or eliminate one or more of the above-identified deficiencies and disadvantages in the prior art to address various problems relating to sensor data processing. The disclosed technology is inspired by the so-called Mixture-of Experts (MoE) techniques which have been employed in the field of large-scale Large Language Models (LLMs). What is proposed is a method that could be used to alleviate the tensions between the small in-car compute budget and the need for a large amount of model parameters so the model can understand all scenarios it might encounter. Various aspects and embodiments of the disclosed technology are defined below and in the accompanying independent and dependent claims.

According to a first aspect, there is provided a computer-implemented method for processing sensor data in a vehicle equipped with an automated driving system. The method comprises obtaining one or more pre-processed representation of sensor data pertaining to a surrounding environment of the vehicle at a current time instance. The sensor data comprises sensor data associated with one or more sensors of the vehicle. The method further comprises obtaining a plurality of fusion experts. The fusion experts of the plurality of fusion experts differ from each other in one or more aspects. The method further comprises processing the one or more pre-processed representations of the sensor data and/or a fused world-view representation for a previous time instance as input to a fusion gating module, to generate a selected subset of fusion experts from the plurality of fusion experts based on an output of the fusion gating module. The method further comprises processing the pre-processed representations of the sensor data together with the fused world-view representation of the previous time instance through each fusion expert of the selected subset of fusion experts, to generate a respective output. The method further comprises providing an updated fused world-view representation for the current time instance based on the outputs of the subset of fusion experts. With this aspect of the disclosed technology, similar advantages and preferred features are present as in the other aspects.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect, there is provided a computing device for processing sensor data in a vehicle equipped with an automated driving system. The computing device comprises control circuitry. The control circuitry is configured to obtain one or more pre-processed representation of sensor data pertaining to a surrounding environment of the vehicle at a current time instance. The sensor data comprises sensor data associated with one or more sensors of the vehicle. The control circuitry is further configured to obtain a plurality of fusion experts. The fusion experts of the plurality of fusion experts differ from each other in one or more aspects. The control circuitry is further configured to process the one or more pre-processed representations of the sensor data and/or a fused world-view representation for a previous time instance as input to a fusion gating module, to generate a selected subset of fusion experts from the plurality of fusion experts based on an output of the fusion gating module. The control circuitry is further configured to process the pre-processed representations of the sensor data together with the fused world-view representation of the previous time instance through each fusion expert of the selected subset of fusion experts, to generate a respective output. The control circuitry is further configured to provide an updated fused world-view representation for the current time instance based on the outputs of the subset of fusion experts. With this aspect of the disclosed technology, similar advantages and preferred features are present as in the other aspects.

According to a fourth aspect, there is provided a vehicle comprising the computing device according to any embodiment of the third aspect. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that the overall performance of the sensor data processing can be improved, e.g. due to the generalization across the plurality of experts. Furthermore, the efficiency of the sensor data processing can be achieved through the routing to relevant expert networks. Moreover, it provides for a reduced computational cost by activating only relevant experts of a plurality of experts. The overall performance of any downstream task may also be improved, by collaboration of the different experts.

An advantage of some embodiments is that the bottleneck that is the limited computational budget in vehicles can be overcome, through the provided method that scales up modern perception and planning models to unseen numbers of parameters, by introducing an expert gating into the sensor encoding, fusion model, and/or prediction model.

An advantage of some embodiments is that it can be trained end-to-end, so that the learning process can make its own decisions on how to split up the responsibility between experts. This can make the method more scalable and powerful, as it makes it possible to add an arbitrary number of experts and retrain the model to scale it up. More specifically, experts can easily be added or updated with new specialties over time, to support an expansion of an operational design domain of the vehicle (or its ADS), and/or to meet new requirements in the operation of the ADS.

An advantage of some embodiments is that the training process can be simplified, e.g. in terms of the training cost. More specifically, training smaller expert networks is typically associated with a lower training cost, compared to training a single larger model, that has to incorporate a great amount of knowledge in a single model.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1A to 1D are schematic flowchart representations of a method, in accordance with some embodiments;
Figure 2 is a schematic illustration of a computing device, in accordance with some embodiments;
Figure 3 is a schematic illustration of a vehicle, in accordance with some embodiments;
Figure 4A to 4C illustrates, by way of a first set of examples, a sensor processing model in accordance with some embodiments;
Figure 5 illustrates, by way of a second example, a sensor processing model in accordance with some embodiments;
Figure 6 illustrates, by way of a third example, a sensor processing model in accordance with some embodiments;
Figure 7 is schematic flowchart representations of a method, in accordance with some embodiments;
Figure 8 is a schematic illustration of a computing device, in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the element are both elements, but they are not the same element, unless otherwise stated.

As used herein, the wording "one or more of" a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc.

### Overview

As explained in the foregoing, the disclosed technology relates to sensor data processing in vehicles equipped with an automated driving system (ADS). This involves not only the processing itself, but also downstream task which relies on sensor data, such as perception and planning systems. An emerging trend in sensor data processing in this context, is to employ temporal fusion and potentially across several different sensors. As a high-level example, the processing pipeline can be described as follows. First, sensor data (from one or more sensors) is collected, and the sensor data from each sensor is encoded by one or more encoding network(s). Different encoding networks may for instance be used for different sensor types (e.g. one network for LiDAR data, another network for image data, etc.), or for different instances of the same sensor type (i.e. one network for camera 1, another network for camera 2, etc.). However, one may also have one encoding network being capable of encoding sensor data of different sensor data types. Second, the encoded sensor data is combined with a fused state (or representation) from a previous time instance, by a sensor and temporal fusion network. The fused state at a particular timestamp can be seen as an abstract representation of the relevant information about the world that the vehicle (or rather its perception system) knows about. The fusion network thus takes the previous fused state and combines it with new encoded sensor measurements into an updated fused state. Third, a task-specific prediction network is run on the latest fused state. An example of such a prediction network could be a transformer decoder which consumes the fused state as input, to output e.g. 3D bounding boxes for objects.

The disclosed technology at least partly builds upon leveraging the concept of Mixture-of-Experts (MoEs) in this kind of sensor data processing. The idea of MoE stems from that LLMs must contain an extremely large number of parameters to reason about any topic. To avoid an inference and training cost which scales rapidly with the amount of knowledge in the LLM, they employ a gating mechanism inside the transformers that routes each token position to an appropriate expert. The individual experts have a relatively low dimensionality and number of parameters, but since many experts are used the total model still has a very large number of parameters. Since only one expert is run at a time, increasing the number of model parameters by adding more experts does not increase the inference cost of the model. The disclosed technology takes this principle even further, and adapts it to the autonomous driving setting. As realized by the inventors, there are several different options for realizing this.

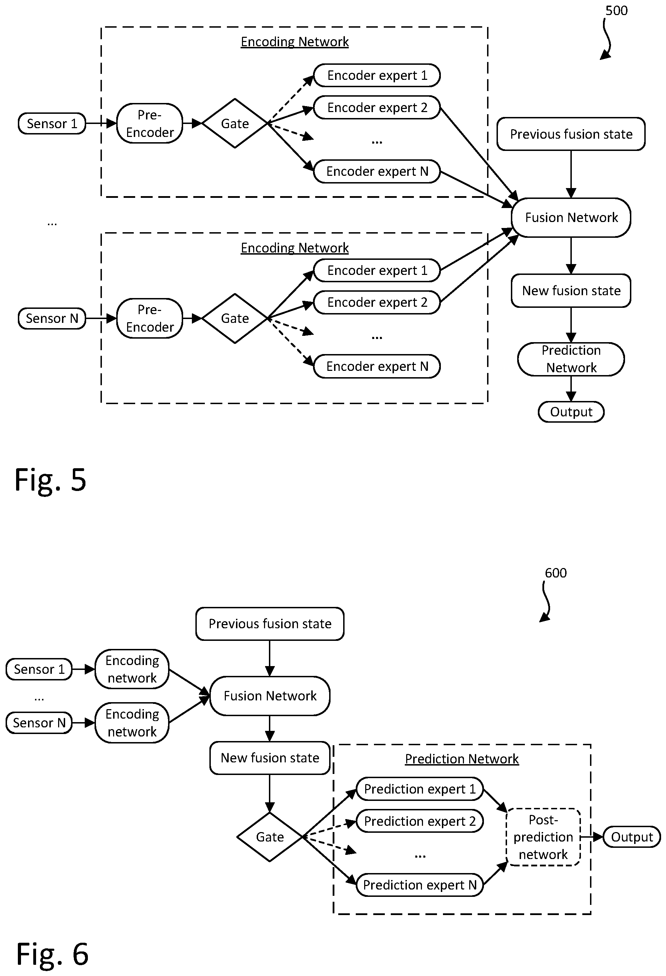

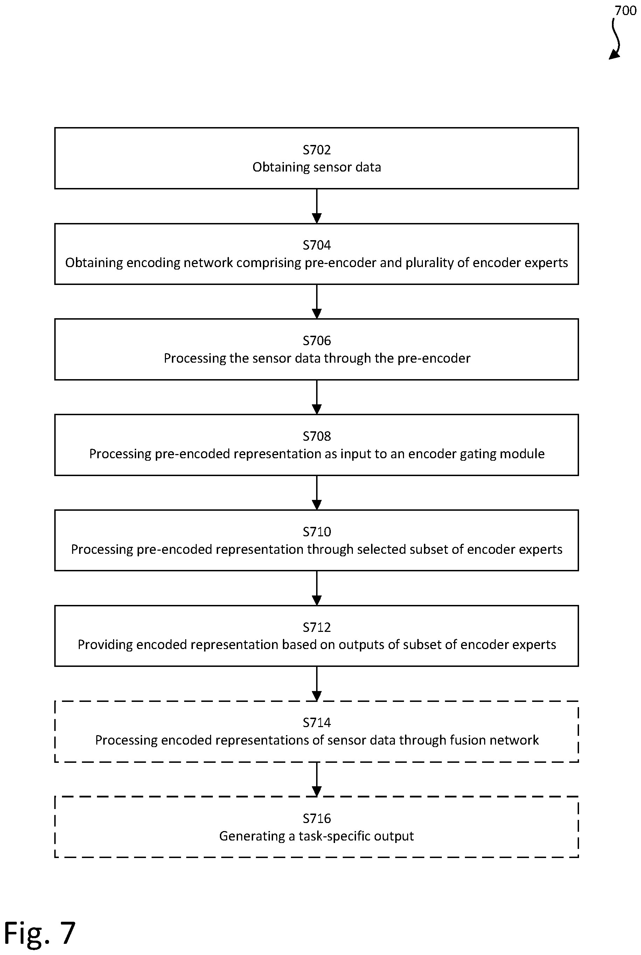

In accordance with the disclosed technology, one option is to employ an MoE as part of the encoding network. In such case, a relatively small and/or light pre-encoder can be run on the sensor data from one or more sensors. Then, a set of encoder experts may be provided. Each encoder expert could be similar to currently known sensor encoders. The output(s) of the pre-encoder can then be fed to a gating module which would select one or a few encoder experts to run. Then, only these selected experts would be run for this particular sensor data. The gating mechanism can be extremely simple and lightweight, e.g., a pooling operation over the pixels and then a linear projection across the channel dimension followed by a softmax. Such gating would be very cheap to run compared to the full encoders. This setup will be further described below, e.g. in connection with Fig. 5 and 7.

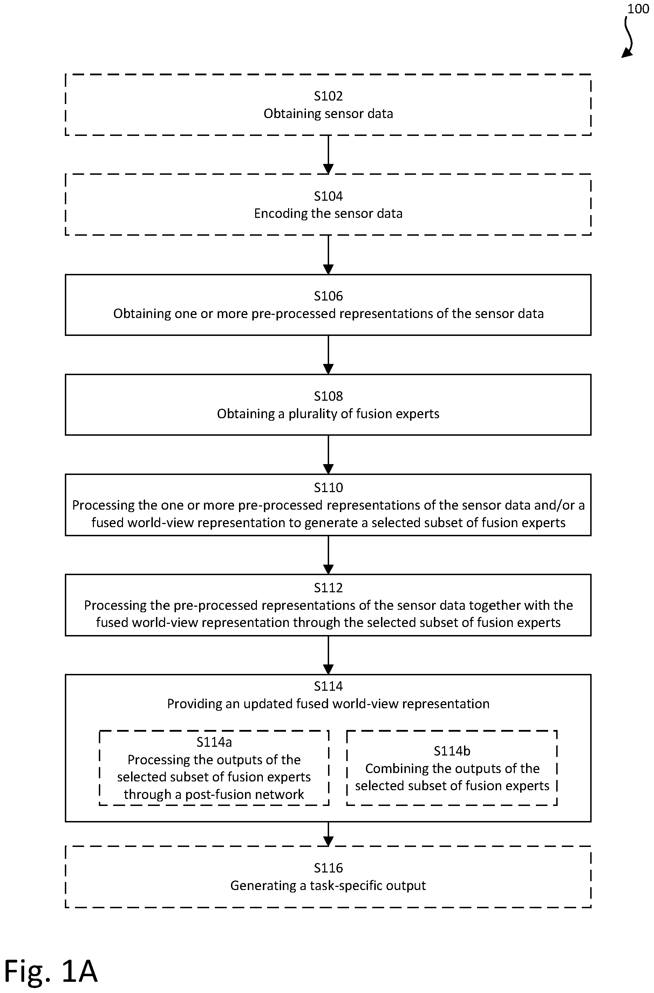

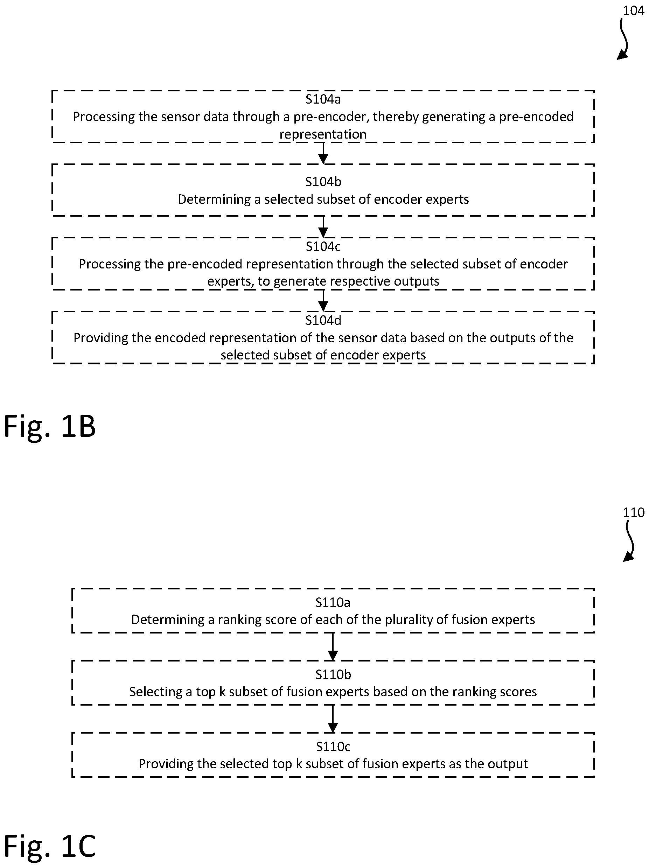

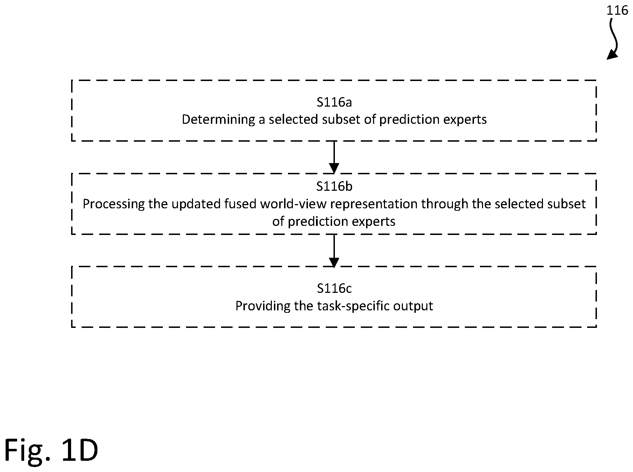

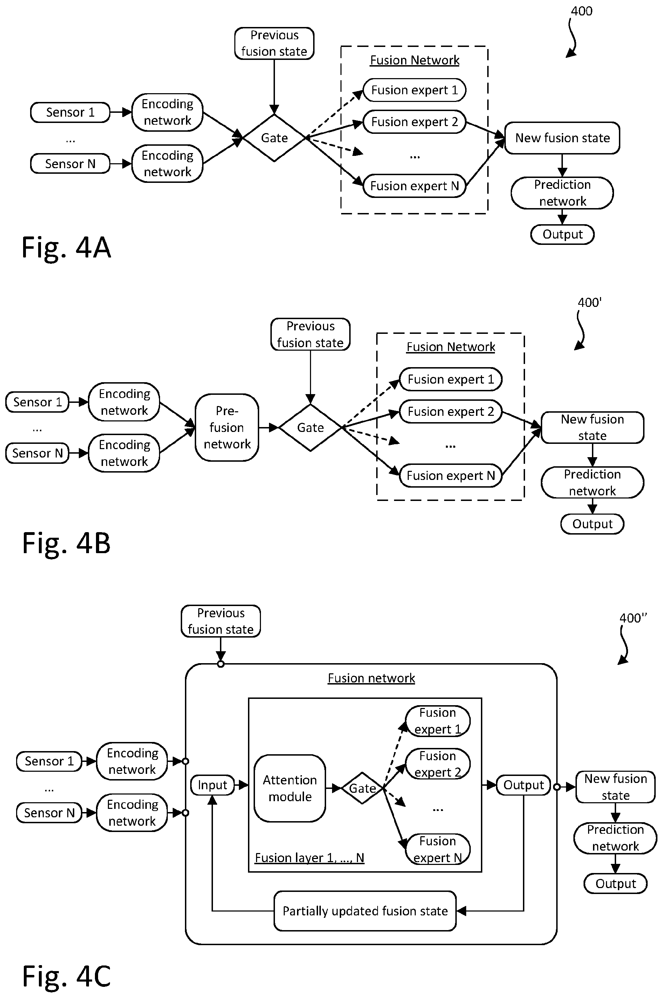

Another option of the disclosed technology is to employ an MoE as part of the fusion network, according to similar principles as above. The fusion network would typically constitute a relatively large fraction of the runtime of the sensor data processing pipeline, and it is tasked with generating the final representation of the world from which predictions will be made. Therefore, the disclosed technology can be found to provide particular advantages in this application. In this case, the encoded sensor data and/or the previous fusion state can be fed to a gating mechanism. The gating mechanism could be preceded by some simple sensor fusion as well, or just depend on the previous fusion state. Then the gating mechanism selects one or multiple fusion experts, each of which can handle sensor and temporal fusion. The selected fusion experts are run and output the updated fusion state. This setup will be further described below, in connection with Fig. 1 and Fig. 4A to 4C.

Yet another option is to employ an MoE as part of the prediction network, according to the same principles as described above. This set up will be further described below, in connection with Fig. 6.

The setup described in the different options above, can also be combined with each other. In other words, expert gating can be employed in the encoding, fusion and/or prediction. This may even further increase the advantages of the disclosed technology.

An advantage of the described solution is that the encoder/fusion/prediction experts can be far smaller and faster at inference time than one large encoding/fusion/prediction network, that would have to handle all kinds of situations. The proposed processing pipeline (which may be implemented as part of a perception module of the ADS) can automatically learn an optimal distribution and task-division of the experts during training, and the different experts could learn to handle different weather conditions, geographic locations, times of day, or amounts of traffic participants. The disclosed method leverages end-to-end learning so that the learning process can make its own decisions on how to split up the responsibility between the experts. This makes the method more scalable and powerful, as it allows adding an arbitrary number of experts and retrain the networks of the pipeline to scale it up.

Moreover, when the number of scenarios the perception model needs to handle should expand, or it is desired increase the number of parameters of the perception model, more experts can simply be added, without affecting the runtime of the pipeline in car. This stands in contrast with existing technologies, which become more and more expensive to run when more parameters are added.

In the following, the disclosed technology will be further described in connection with Figs. 1 to 8.

### Definitions

In the present context, an "Automated Driving System" ("ADS") refers to a complex combination of hardware and software components designed to control and operate a vehicle without direct human intervention. ADS technology aims to automate various aspects of driving, such as steering, acceleration, deceleration, and monitoring of the surrounding environment. The primary goal of an ADS is to enhance safety, efficiency, and convenience in transportation. An ADS can range from basic driver assistance systems to highly advanced autonomous driving systems, depending on its level of automation, as classified by standards like the SAE J3016. These systems use a variety of sensors, cameras, radar, lidar, and powerful computer algorithms to perceive the environment and make driving decisions. The specific capabilities and features/functions of an ADS can vary widely, from systems that provide limited assistance to those that can handle complex driving tasks independently in specific conditions.

Advanced Driver Assistance Systems (ADAS) are technologies that assist drivers in the driving process, though they do not necessarily offer full autonomy. ADAS features often serve as building blocks for ADS. Examples include adaptive cruise control, lane-keeping assist, automatic emergency braking, and parking assistance. They enhance safety and convenience but typically require some level of human supervision and intervention. On the other hand, Autonomous Driving (AD) are technologies that are designed to control and navigate a vehicle without human supervision. Accordingly, it can be said that the distinction between ADAS and AD lies in the level of autonomy and control. ADAS systems are designed to aid and support drivers, while an AD aims to take full control of the vehicle without requiring constant human oversight. AD accordingly aims for higher levels of autonomy (such as Levels 4 and 5, according to the SAE International standard), where the vehicle can operate independently in most or all driving scenarios without human intervention. As mentioned in the foregoing, the term "ADS" in used herein as an umbrella term encompassing both ADAS and AD. An ADS function or ADS feature may in the present context be understood as a specific function or feature of the entire ADS stack, such as e.g., a Highway Pilot feature, a Traffic-Jam pilot feature, a path planning feature, and so forth.

In the present context, a "sensor" or "sensor device" refers to a specialized component or system that is designed to capture and gather information from the vehicle's surroundings. It may further refer to components for gathering information of the vehicle itself. These sensors play a crucial role in enabling the ADS to perceive and understand their environment, make informed decisions, and navigate safely. Sensors are typically integrated into the autonomous vehicle's hardware and software systems to provide real-time data for various tasks such as obstacle detection, localization, road model estimation, and object recognition. Common types of sensors used in autonomous driving include LiDAR (Light Detection and Ranging), Radar, Cameras, Ultrasonic sensors, inertial measurement unit (IMU), GPS, wheel speed sensors etc. LiDAR sensors use laser beams to measure distances and create high-resolution 3D maps of the vehicle's surroundings based on point clouds. Radar sensors use radio waves to determine the distance and relative speed of objects around the vehicle. Camera sensors capture visual data, allowing the vehicle's computer system to recognize traffic signs, lane markings, pedestrians, and other vehicles. Ultrasonic sensors use sound waves to measure proximity to objects. Various machine learning algorithms (such as e.g., artificial neural networks) may be employed to process the output from the sensors to make sense of the environment.

The wording "network" (may also be referred to as machine-learning algorithm, machine learning model, (artificial) neural network, deep learning network and so forth) as used herein, refers to any computational system or algorithm that is trained on data to make predictions, decisions or otherwise generate an output, e.g. by learning patterns and relationships from training data and applying that knowledge on new input data.

Deployment of a such networks typically involves a training phase where the network learns from labeled or unlabeled training data to achieve accurate predictions during the subsequent inference phase. The training data (and input data during inference) may e.g. be an image, or sequence of images, LIDAR data (i.e. a point cloud), radar data, or any other form of data. Furthermore, the training/input data may comprise a combination or fusion of one or more different data types. Additionally, or in combination, it may comprise a combination or fusion of two or more instances of the same data types, such as two or more images from different cameras.

Networks or machine learning models may be implemented in some embodiments using publicly available suitable software development machine learning code elements, for example, such as those which are available in Pytorch, TensorFlow, and Keras, or in any other suitable software development platform, in any manner known to be suitable to someone of ordinary skill in the art.

### Embodiments

Figure 1A to 1D together illustrates a schematic flowchart representation of a computer-implemented method 100 for processing sensor data in a vehicle equipped with an automated driving system (ADS). Fig. 1B illustrates a number of optional sub-steps to the step denoted S104 in Fig. 1A. Similarly, Fig. 1C illustrates a number of optional sub-steps to the step denoted S110 in Fig. 1A. Similarly, Fig. 1D illustrates a number of optional sub-steps to the step denoted S116 in Fig. 1A.

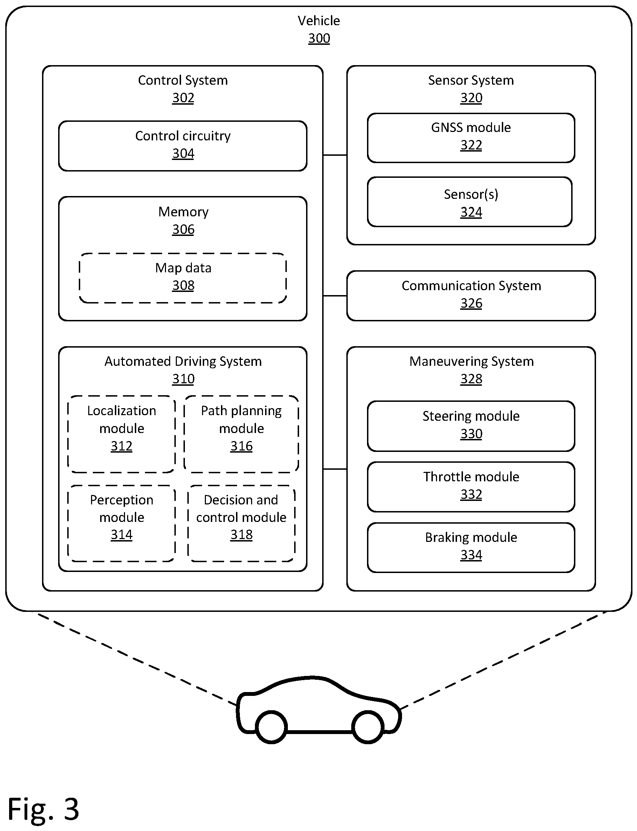

In some embodiments, the method 100 may be a seen as a method 100 for sensor data fusion. The method 100 may be performed in the vehicle (i.e. by computing resources of the vehicle). More specifically, the method 100 may be performed as part of the ADS. Such a vehicle 300 is described below, by way of example, in connection with Fig. 3. It is however to be noted that the principles described herein, may also be performed in an offline environment, such as by a server. In such a case, the techniques described herein can be used as part of a pseudo annotation system, i.e. for automatically (or semi-automatically) generating annotation data for training data which can be used in the development of other machine learning models used in the context of automated driving systems.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. For example, the steps denoted S106 and S108 can be performed independently of each other. Such variation will depend on the software and hardware systems chosen and on designer choice. All such variations are within the scope of the disclosed technology. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present disclosed technology. Other solutions, uses, objectives, and functions within the scope of the disclosed technology as claimed below described patent claims should be apparent for the person skilled in the art.

It should further be appreciated that the method 100 of Fig. 1 comprises some steps which are illustrated as boxes in solid lines and some steps which are illustrated in dashed lines. The steps which are shown in solid lines are steps which are comprised in the broadest example embodiment of the method 100. The steps which are comprised in dashed lines are examples of a number of optional steps which may form part of a number of alternative embodiments. It should be appreciated that the optional steps need not be performed in order. Furthermore, it should be appreciated that not all of the optional steps need to be performed. The optional steps may be performed in any order and in any combination.

The method 100 comprises obtaining S106 one or more pre-processed representation of sensor data. The sensor data comprises sensor data associated with one or more sensors of the vehicle. In other words, the sensor data may be captured by the one or more sensors of the vehicle, and comprise data from each of the sensors. Thus, the sensor data may comprise one or more sensor data types. As an example, the sensor data may comprise image data captured by a camera of the vehicle, LiDAR data captured by a LiDAR sensor, radar data captured by a radar, etc. More specifically, the sensor data may comprise one or more of image data, LIDAR data, radar data, and ultrasonic data.

The sensor data pertains to a surrounding environment of the vehicle at a current time instance. Put differently, the sensor data may depict, or in any other way represent the surrounding environment. The surrounding environment of the vehicle can be understood as a general area around the vehicle in which objects (such as traffic signs, or other vehicles, landmarks, obstacles, etc.) can be detected and identified by vehicle sensors (radar, LIDAR, cameras, etc.), i.e. within a sensor range of the ego-vehicle.

Each of the one or more pre-processed representations of the sensor data may be associated with sensor data of a respective sensor of the one or more sensors. In other words, each pre-processed representation may correspond to sensor data of a sensor data type. One pre-processed representation may be associated (i.e. generated based on) with image data, while another pre-processed representation may be associated with LiDAR data, etc. However, in some embodiments, sensor data of more than one sensor may be associated with one pre-processed representation. In other words, a pre-processed representation can be formed based on image data together with LiDAR data.

The wording "pre-processed representation" may in the present context be understood as a transformed or processed version of the sensor data. The pre-processed representation may be obtained through applying certain computations or modifications to the sensor data. Such computations may e.g. serve to enhance its usability, reduce noise, integrate multiple data sources, etc. This representation can take various forms, depending on the specific processing techniques employed.

In some embodiments, the pre-processed representation of the sensor data is an encoded representation of the sensor data. In other words, pre-processing the sensor data may comprise encoding the sensor data. An example of this is shown and further explained in connection with Fig. 4A below. The wording "encoded representation" may be understood as a compressed form of the sensor data. The sensor data may e.g. be transformed into a different representation, such as into a vector representation in a latent space, or any other numerical representation. In some cases, the sensor data is transformed into a lower dimension representation. The encoded representation may be generated by processing said sensor data through an encoding network. The encoding network may be any suitable network commonly used for encoding sensor data. As an example, the encoding network may comprise a Convolutional Neural Network (CNN). In another example, the encoding network may comprise a Vision Transformer for processing image data. In yet another example, the encoding network may comprise a PointNet or PointPillars for processing LiDAR data or radar data.

In some embodiments, the pre-processed representation of the sensor data is a pre-fused representation of the sensor data. In other words, pre-processing the sensor data may comprise performing some form of sensor fusion. The pre-fused representation may be generated by processing said sensor data through a pre-fusion network. An example of this is shown and further explained in connection with Fig. 4B below.

In some embodiments, the pre-processed representation of the sensor data is an internal state of the fusion network. More specifically, the concept of the disclosed technology may be employed as part of a fusion network. For example, the fusion network may be a transformer. The transformer comprising a number of transformer layers. Each transformer layer in turn, comprises an attention layer and a FeedForward neural network (FFN) in which the concept of MoE can be employed. The attention layer may perform both cross-attention and self-attention. An example of this is shown and further explained in connection with Fig. 4C below.

The method 100 further comprises obtaining S108 a plurality of fusion experts. The fusion experts of the plurality of fusion experts differ from each other in one or more aspects. The plurality of fusion experts may thus be (or form) a mixture-of-experts. Each fusion expert may be a separate neural network. In other words, the fusion experts may be seen as specialized neural networks for the task of fusing sensor data. One aspect in which the fusion experts may differ from each other is in that they may have different sets of weights. Another aspect, may be that the fusion experts have been trained on different datasets. Yet another aspect, may be that the fusion experts have different architectures. In further examples, the fusion experts may differ in that they focus on different regions in the input, or focused at identifying different patterns in the input. It is to be noted that these aspects are to be seen as non-limiting examples, as the fusion experts may differ in other ways as well. In general, the fusion experts differ from each other in the sense that they are specialized at different things as part of the task of fusing the sensor data.

The method 100 further comprises processing S110 the one or more pre-processed representations of the sensor data and/or a fused world-view representation for a previous time instance as input to a fusion gating module, to generate a selected subset of fusion experts from the plurality of fusion experts based on an output of the fusion gating module.

The world-view representation can be understood as the vehicle's (or rather the ADS's) internal model (or state) of the surrounding environment, i.e. a representation of how the vehicle perceives its surroundings. The world-view representation may thus be seen as a representation of the surrounding environment. This can be used to allow the vehicle to interpret and navigate its surroundings, and serve as a foundation for decision-making, path planning and control. The world-view representation is "fused" in the sense that it is constructed by integrating data from multiple sensors, as well as from multiple time instances. The fused world-view representation of a certain time instance may thus be a representation of the surrounding environment, based on the sensor data pertaining to the surrounding environment of the vehicle at said time instance, and sensor data pertaining to the surrounding environment of the vehicle at at least one previous time instance. The different time instances as referred to herein, in connection with captured sensor data may correspond to the point in time of having captured the sensor data. Thus, two subsequent time instances may constitute two subsequent frames of capture.

As stated above, the fused world-view representation is a representation for a previous time instance. The wording "current" and "previous" as in "current time instance" and "previous time instance", are intended solely to indicate a relative relationship between time instances. Thus, the term "current" does not necessarily refer to the actual time at which the method (or a step thereof) is performed. Nor does "previous" necessarily refer to the immediately preceding time instance. Instead, "previous" simply denotes an earlier time instance in relation to the "current" one. In this specific case, the current time instance refers to a time instance at which the latest obtained sensor data depicts the surrounding environment (i.e. when it was captured). This sensor data is yet to have been fused into the fused world-view representation. The previous time instance refers to a time instance up to which the fused world-view representation has been generated. In other words, the fused world-view representation is a representation of the world up to said time instance. As will be further explained below, when the sensor data of the current time instance has been integrated into the world-view representation, an "updated fused world-view representation for the current time instance" can be provided.

The fusion gating module is configured to generate an output indicative of the selected subset of fusion experts based on receiving the one or more pre-processed representations of the sensor data, the fused world-view representation for the previous time instance, or both, as input. The output may comprise any information from which the selected subset of fusion experts can be obtained. In some embodiment, the output comprises the selected subset of fusion experts. In other words, the step of processing S110 the one or more pre-processed representations of the sensor data and/or the fused world-view representation for the previous time instance as input to the fusion gating module may be understood as determining a selected subset of fusion experts from the plurality of fusion experts, using the fusion gating module, wherein the fusion gating module is configured to process said input, and output the corresponding selected subset of fusion experts.

The selected subset of fusion experts can be seen as a one or more fusion experts (but not all of) the plurality of fusion experts, that are selected for processing the pre-processed representations of the sensor data. In line with the concept of MoE, the gating module thus selects the fusion experts that is best suited for processing the input, by applying some kind of gating function or mechanism. The gating module can thus be seen as routing the input to the selected experts. The gating function may be configured to map the input (i.e. the pre-processed representations of the sensor data and/or the previous world-view representation) to a ranking score for the respective fusion expert. Seen differently, the gating module may be configured to dynamically select which fusion experts should contribute to the final output for a given input. The gating module may thus determine a weighting of each fusion expert's contribution, allowing the fusion process to adaptively allocate computational resources based on the complexity and characteristics of the input, in the best way possible and for achieving the best possible performance of the results.

More specifically, the fusion gating module may be configured to generate the selected subset of fusion experts by first determining S110a a ranking score of each of the plurality of fusion experts based on the input. Then selecting S110b a top k subset of fusion experts based on the determined ranking scores. Here, k is a positive integer larger than 0, and less than the number of fusion experts of the plurality of fusion experts. And lastly, providing S110c the selected top k subset of fusion experts as the output. The ranking score can be seen as a metric indicative of their (i.e. the fusion expert's) "relevance for" or "performance at" processing the input. A higher ranking score of a fusion expert may thus indicate that said fusion expert is better to be used, than a fusion expert with a lower ranking score. The ranking scores can thus be seen as weights of the different fusion experts.

The gating module may further consider additional data in generating the output. More specifically, the step of selecting S110b the top k subset of fusions experts may be further based on meta data associated with one or more environmental conditions associated with the surrounding environment. The environmental conditions may e.g. pertain to lighting levels, weather, time-of-day, etc. of the surrounding environment. This data may e.g. be obtained from onboard systems of the vehicle, or from externa data sources. By incorporating meta data associated with one or more environmental conditions, the weighting of the fusion experts can be improved, as this information can provide additional signal to the decision making. For example, if the gating module knows that it is low lighting levels (e.g. due to driving at night), it may put more weight into fusion experts that perform well in such scenarios.

Moreover, the gating module may further consider what selection of experts that have been made in previous time instances. More specifically, selecting S110b the top k subset of fusion experts may be further based on a subset of fusion experts used to provide the fused world-view representation of the previous time instance. Thereby, the fusion experts can be alternated with respect to subsequent time instances. As an example, the gating module may put lower weight to fusion experts that was used in a previous iteration. The information about which fusion experts have been used when may be fed explicitly to the gating module, or implicitly by being incorporated in the fused world-view representation of the previous time instance as fed to the gating module.

Moreover, some of the fusion experts of the plurality of fusion experts may be selected to be used in every iteration of the method (i.e. every time new sensor data is to be fused into the world-view representation). The gating module may then select these fusion experts as part of the generated set of selected fusion experts each time the method is performed.

In some embodiments, the fusion gating module is configured to apply a learned gating function to the input, to generate the output. The gating module may e.g. employ a neural network which is trained to output the selected subset of fusion experts, based on the input. The gating function may comprise a Softmax activation function or a Sigmoid activation function, each configured to determine the ranking score associated with each fusion expert, based on the input. The learned gating function may be trained jointly with the rest of the network/model (i.e. the encoding network(s), the fusion network comprising the fusion experts, and the prediction network). This can be done in an end-to-end manner.

In some embodiments, the fusion gating module is configured to apply a deterministic gating function to the input, to generate the output. In contrast to the learned gating function, the deterministic gating function is not learned, but instead applies a rule-based approach in determining the ranking scores. The deterministic gating function may be present as part of the training of the rest of the network (i.e. the fusion experts). This way, the fusion experts can be optimized in view of the deterministic gating function. Also states on which the deterministic gating function runs can be optimized, since it may be trained end-to-end with the rest of the network/model.

The method 100 further comprises processing S112 the pre-processed representations of the sensor data together with the fused world-view representation of the previous time instance through each fusion expert of the selected subset of fusion experts, to generate a respective output. In other words, the pre-processed representations of the sensor data and the fused world-view representation of the previous time instance may be fed to each of the selected subset of fusion experts. The output generated by each fusion expert can thus be a fused representation of the pre-processed representations of the sensor data and the fused world-view representation of the previous time instance.

In some embodiments, the pre-processed representation of the sensor data is an attended representation of the sensor data, generated by applying cross-attention and/or self-attention with a partially updated fused world-view representation, one or more encoded representations of the sensor data and the fused world-view representation of the previous time instance. The partially updated fused world-view representation being obtained from a pre-fusion network. The pre-fusion network may in this case be a previous iteration of performing the steps denoted S110 and S112, or received from processing data through a preceding fusion step of a sequential fusion process. More specifically, the principles of the disclosed technology may be applied within a fusion network comprising a number of transformer layers (or fusion layers). The sensor data fusion may thus be performed by processing data through the number of transformer layers. The number of transformer layers may thus form a sequence of fusion layers. The steps of the method 100 may then be seen as the steps which is performed in one of said transformer layers. The partially updated fused world-view representation may then be the output of a previous transformer layer. For further details, reference is made to Fig. 4C below.

The method 100 further comprises providing S114 an updated fused world-view representation for the current time instance based on the outputs of the subset of fusion experts.

In some embodiments, the updated fused world-view representation is provided S114 by processing S114a the output of each fusion expert of the selected subset of fusion experts though a post-fusion network configured to generate the updated fused world-view representation. The post-fusion network may thus be a learned neural network, trained to generate the final updated fused world-view representation, from the outputs of the fusion experts.

In some embodiments, the updated fused world-view representation is provided S114 by combining S114b the outputs of each fusion expert of the selected subset of fusion experts into the updated fused world-view representation. The outputs may be combined S114b through weighted summation. The outputs may be combined S114b through averaging, or weighted averaging. The weights of the weighted averaging may be the ranking scores (or weights) determined as part of the gating function. In other words, the outputs may be combined according to how the corresponding fusion experts was weighted in the gating module. In another example, combining S114b the outputs of each fusion expert of the selected subset of fusion experts may be done by summing the outputs, or by applying max pooling to the outputs.

As explained above, some of the fusion experts may be selected to be used in every iteration of the method. In other words, one set of experts may always be run, and the rest may be dynamically selected through the principles disclosed herein. This can alternatively be described as the method 100 may further comprise processing the pre-processed representations of the sensor data together with the fused world-view representation of the previous time instance through a set of pre-selected fusion experts, to generate a respective output. The updated fused world-view representation may then be provided S114 further based on the outputs of the set of pre-selected fusion experts.

The method 100 may further comprise generating S116 a task-specific output, by processing the updated fused world-view representation through a task-specific prediction network configured to generate the task specific output. The task-specific output may then be used in the operation of the vehicle. For example, by being sent to a subsequent module of the ADS, tasked with e.g. path planning, or decision and control of the vehicle.

The task-specific prediction network may be configured to perform a task associated with operation of the automated driving system. The task may for instance be any one of an object detection task, an object classification task, an object tracking task, a lane estimation task, a free-space estimation task, a trajectory prediction task, an obstacle avoidance task, a path planning task, a scene classification task, a traffic sign classification task, a 3D scene flow task, and an occupancy prediction task.

So far, the disclosed technology has been described as a way of employing the concept of MoEs in the process of sensor data fusion (i.e. serving as a fusion network). It is however to be noted that the same techniques can be applied in the process of encoding the sensor data (illustrated by way of example in Fig. 5), and in the process of generating task-specific predictions (illustrated by way of example in Fig. 6). This will be described further in the following.

In some embodiments, the method 100 further comprises obtaining S102 the sensor data pertaining to the surrounding environment of the vehicle at the current time instance. The method 100 may then further comprise encoding S104 the sensor data associated with each of the one or more sensors, by processing said sensor data through an encoding network, thereby generating an encoded representation of the sensor data associated with each of the one or more sensors. The encoding network may comprise a pre-encoder and a plurality of encoder experts. Similar to the plurality of fusion experts, the plurality of encoder experts may differ from each other, and form a mixture-of-experts. Processing the sensor data associated with each of the one or more sensors through the encoding network may then comprise, for each of the one or more sensors, processing S104a the sensor data associated with said sensor through the pre-encoder, thereby generating a pre-encoded representation of the sensor data. Then, determining S104b a selected subset of encoder experts from the plurality of encoder experts, using an encoder gating module. This may be done by processing the pre-encoded representations of the sensor data through the encoder gating module. Then, processing S104c the pre-encoded representation of the sensor data through each encoder expert of the subset of encoder experts, to generate a respective output. And lastly, providing S104d the encoded representation of the sensor data based on the outputs of the subset of encoder experts. The encoded representation of the sensor data (potentially after some further processing) may then be processed as the pre-processed representations of the sensor data through the fusion gating module, as explained above. The principles relating to the fusion gating module and the plurality of fusion experts apply also to the encoder gating module and the plurality of encoder experts. To avoid undue repetition, reference is made to the above.

In some embodiments, the method 100 further comprises generating S116 a task-specific output by processing the updated fused world-view representation through a task-specific prediction network configured to generate the task specific output. The task-specific prediction network may comprise a plurality of prediction experts. Generating S116 the task-specific output may comprise determining S116a a selected subset of prediction experts from the plurality of prediction experts, using a prediction gating module. The prediction gating module may be configured to process at least the updated fused world-view representation, and generate an output indicative of the selected subset of prediction experts. Then, processing S116b the updated fused world-view representation through each prediction expert of the subset of prediction experts, to generate a respective output. Lastly, providing S116c the task-specific output based on the outputs of the subset of prediction experts. The task-specific output may be provided S116c by processing the outputs of the subset of prediction experts through a post-prediction network, configured to generate the final prediction output (such as bounding boxes, object classifications, planned trajectory, etc.). The principles relating to the fusion gating module and the plurality of fusion experts apply also to the prediction gating module and the plurality of prediction experts. To avoid undue repetition, reference is made to the above.

In some embodiments, the method 100 further comprises obtaining map data associated with the surrounding environment of the vehicle. More specifically, the map data may be obtained based on a location of the vehicle at a time of capturing the sensor data. The step denoted S110 may then further comprise processing the map data as input to the fusion gating module. Alternatively, or in combination, the step denoted S112 may further comprise processing the map data through each fusion expert of the selected subset of fusion experts. Thereby, map data may be incorporated for providing S114 the updated fused world-view representation.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

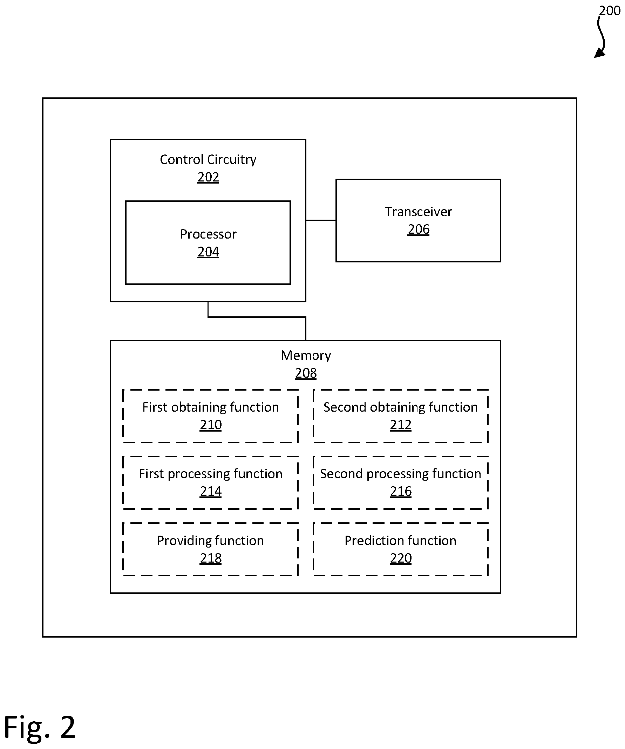

Figure 2 is a schematic illustration of a computing device 200, in accordance with some embodiments of the disclosed technology. The computing device 200 may be configured to perform the method 100 as described in connection with Fig. 1. Thus, the computing device 200 may be a computing device 200 for processing sensor data in a vehicle equipped with an automated driving system.

The computing device 200 as described herein, refers to a computer system, or any device or general computing system configured to perform various functions. Even though the computing device 200 is herein illustrated as one device, the computing device 200 may be a distributed computing system, formed by a number of different devices. The computing device 200 may be provided as part of a vehicle 300.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps may be implemented in one or more functions stored in the memory 208.

The transceiver 206 is configured to enable the computing device 200 to communicate with other entities, such as other devices. The transceiver 206 may both transmit data from and receive data to the computing device 200. The computing device 200 may e.g. be part of a vehicle. The transceiver 206 may then allow the computing device 200 to communicate with other systems of the vehicle, or with external entities, such as other vehicles, or a remote server.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present.

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 is described.

The control circuitry 202 is configured to obtain one or more pre-processed representation of sensor data pertaining to a surrounding environment of the vehicle at a current time instance. The sensor data comprises sensor data associated with one or more sensors of the vehicle This may be performed e.g. by execution of a first obtaining function 210.

The control circuitry 202 is further configured to obtain a plurality of fusion experts. The fusion experts of the plurality of fusion experts differ from each other in one or more aspects. This may be performed e.g. by execution of a second obtaining function 212.

The control circuitry 202 is further configured to process the one or more pre-processed representations of the sensor data and/or a fused world-view representation for a previous time instance as input to a fusion gating module, to generate a selected subset of fusion experts from the plurality of fusion experts based on an output of the fusion gating module. This may be performed e.g. by execution of a first processing function 214.

The control circuitry 202 is further configured to process the pre-processed representations of the sensor data together with the fused world-view representation of the previous time instance through each fusion expert of the selected subset of fusion experts, to generate a respective output This may be performed e.g. by execution of second processing function 216.

The control circuitry 202 is further configured to provide an updated fused world-view representation for the current time instance based on the outputs of the subset of fusion experts. This may be performed e.g. by execution of a providing function 218.

The control circuitry 202 may be further configured to generate a task-specific output by processing the updated fused world-view representation through a task-specific prediction network configured to generate the task specific output. This may be performed e.g. by execution of a prediction function 220.

It should be noted that the first and second obtaining function 210, 212 may be implemented as two separate functions, or as one common obtaining function. Similarly, the first and second processing function 214, 216 may be implemented as two separate functions, or as one common processing function.

It should be further noted that the principles, features, aspects, and advantages of the method 100 as described above in connection with Fig. 1, are applicable also to the computing device 200 as described herein. In order to avoid undue repetition, reference is made to the above. Hence, the control circuitry may be configured to perform any of the steps as described as part of the method 100.

Figure 3 is a schematic illustration of a vehicle 300 in accordance with some embodiments. The vehicle 300 may be equipped with an Automated Driving System (ADS) 310. As used herein, a "vehicle" is any form of motorized transport. For example, the vehicle 300 may be any road vehicle such as a car (as illustrated herein), a motorcycle, a (cargo) truck, a bus, a smart bicycle, etc. The vehicle 300 may be equipped with the computing device 200 as described above. The vehicle 300 is thus enabled for performing the disclosed technology.

The vehicle 300 comprises a number of elements which can be commonly found in autonomous or semi-autonomous vehicles. It will be understood that the vehicle 300 can have any combination of the various elements shown in Fig. 3. Moreover, the vehicle 300 may comprise further elements than those shown in Fig. 3. While the various elements are herein shown as located inside the vehicle 300, one or more of the elements can be located externally to the vehicle 300. Further, even though the various elements are herein depicted in a certain arrangement, the various elements may also be implemented in different arrangements, as readily understood by the skilled person. It should be further noted that the various elements may be communicatively connected to each other in any suitable way. The vehicle 300 of Fig. 3 should be seen merely as an illustrative example, as the elements of the vehicle 300 can be realized in several different ways.

The vehicle 300 comprises a control system 302. The control system 302 is configured to carry out overall control of functions and operations of the vehicle 300. The control system 302 comprises control circuitry 304 and a memory 306. The control circuitry 302 may physically comprise one single circuitry device. Alternatively, the control circuitry 302 may be distributed over several circuitry devices. As an example, the control system 302 may share its control circuitry 304 with other parts of the vehicle. The control circuitry 302 may comprise one or more processors, such as a central processing unit (CPU), microcontroller, or microprocessor. The one or more processors may be configured to execute program code stored in the memory 306, in order to carry out functions and operations of the vehicle 300. The processor(s) may be or include any number of hardware components for conducting data or signal processing or for executing computer code stored in the memory 306. In some embodiments, the control circuitry 304, or some functions thereof, may be implemented on one or more so-called system-on-a-chips (SoC). As an example, the ADS 310 may be implemented on a SoC. The memory 306 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 306 may include database components, object code components, script components, or any other type of information structure for supporting the various activities of the present description.

In the illustrated example, the memory 306 further stores map data 308. The map data 308 may for instance be used by the ADS 310 of the vehicle 300 in order to perform autonomous functions of the vehicle 300. The map data 308 may comprise high-definition (HD) map data and/or standard-definition (SD) map data. It is contemplated that the memory 308, even though illustrated as a separate element from the ADS 310, may be provided as an integral element of the ADS 310. In other words, according to some embodiments, any distributed or local memory device may be utilized in the realization of the present inventive concept. Similarly, the control circuitry 304 may be distributed e.g. such that one or more processors of the control circuitry 304 is provided as integral elements of the ADS 310 or any other system of the vehicle 300. In other words, according to an exemplary embodiment, any distributed or local control circuitry device may be utilized in the realization of the disclosed technology.

The vehicle 300 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 300. The sensor system 320 may further comprise one or more sensors 324. The one or more sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 300.

The vehicle 300 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 300 or with local infrastructure elements. ETSI is working on cellular standards for vehicle communication and for instance 5G is considered as a suitable solution due to the low latency and efficient handling of high bandwidths and communication channels.

The communication system 326 may further provide the possibility to send output to a remote location (e.g. remote server, operator or control center) by means of the one or more antennas. Moreover, the communication system 326 may be further configured to allow the various elements of the vehicle 300 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 300 further comprises a maneuvering system 320. The maneuvering system 328 is configured to control the maneuvering of the vehicle 300. The maneuvering system 328 comprises a steering module 330 configured to control the heading of the vehicle 300. The maneuvering system 328 further comprises a throttle module 332 configured to control actuation of the throttle of the vehicle 300. The maneuvering system 328 further comprises a braking module 334 configured to control actuation of the brakes of the vehicle 300. The various modules of the steering system 328 may receive manual input from a driver of the vehicle 300 (i.e. from a steering wheel, a gas pedal and a brake pedal respectively). However, the maneuvering system 328 may be communicatively connected to the ADS 310 of the vehicle, to receive instructions on how the various modules should act. Thus, the ADS 310 can control the maneuvering of the vehicle 300.

As stated above, the vehicle 300 comprises an ADS 310. The ADS 310 may be part of the control system 302 of the vehicle. The ADS 310 is configured to carry out the functions and operations of the autonomous functions of the vehicle 300. The ADS 310 can comprise a number of modules, where each module is tasked with different functions of the ADS 310.

The ADS 310 may comprise a localization module 312 or localization block/system. The localization module 312 is configured to determine and/or monitor a geographical position and heading of the vehicle 300, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS.

The ADS 310 may further comprise a perception module 314 or perception block/system. The perception module 314 may refer to any commonly known module and/or functionality, e.g. comprised in one or more electronic control modules and/or nodes of the vehicle 300, adapted and/or configured to interpret sensory data - relevant for driving of the vehicle 300 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320. The device 200 as described above, may be provided e.g. as part of the perception module 314.

The localization module 312 and/or the perception module 314 may be communicatively connected to the sensor system 320 in order to receive sensor data from the sensor system 320. The localization module 312 and/or the perception module 314 may further transmit control instructions to the sensor system 320.

The ADS may further comprise a path planning module 316. The path planning module 316 is configured to determine a planned path of the vehicle 300 based on a perception and location of the vehicle as determined by the perception module 314 and the localization module 312 respectively. A planned path determined by the path planning module 316 may be sent to the maneuvering system 328 for execution. As an example, the determined current position of the vehicle on the navigation map may be transmitted to the path planning module 316.

The ADS may further comprise a decision and control module 318. The decision and control module 318 is configured to perform the control and make decisions of the ADS 310. For example, the decision and control module 318 may decide on whether the planned path determined by the path-planning module 316 should be executed or not. The decision and control module 318 may be further configured to detect any deviating behavior of the vehicle, such as deviations from the planned path, or expected trajectory of the path planning module 316. This includes both evasive maneuvers performed by the ADS 310 and by a driver of the vehicle.

It should be understood that parts of the described solution may be implemented either in the vehicle 300, in a system located external to the vehicle, or in a combination of internal and external to the vehicle; for instance, in a server in communication with the vehicle, a so-called cloud solution. The different features and principles of the embodiments may be combined in other combinations than those described. Further, the elements of the vehicle 300 (i.e. the systems and modules) may be implemented in different combinations than those described herein.

Figure 4A, 4B and 4C illustrates three different examples of how the disclosed technology can be realized as part of the sensor fusion process. More specifically, the figures schematically illustrate a processing pipeline from new sensor data input, to a task-specific prediction output. The illustrated processing pipeline may also be referred to as a sensor processing model 400 (or just "the model"). As seen in Fig. 4A, the whole sensor processing pipeline is shown, although the disclosed technology in its broadest form relate specifically to the fusion part of the pipeline.

Turning first to Fig. 4A, which shows an example where the concept of MoE is employed as complete fusion networks. Put differently, Fig. 4A shows a case where each of the fusion experts constitutes a complete (or stand-alone) fusion network.

As input to the model 400 is sensor data from one or more sensors, herein represented by "Sensor 1" to "Sensor N". N herein refers to any positive integer. The sensor data from the sensors are then fed to encoding networks. In the illustrated example, one encoding network is provided for each sensor. Thereby, the encoding networks can be specialized at encoding sensor data of that particular sensor data type. However, as explained in the foregoing, combined encoding networks, that are able to process sensor data from more than one sensor type or sensor instance, are possible as well.

The encoded representations of the sensor data (as output from the encoding networks) are then fed, together with a previous fusion state (referred to above as "fused world-view representation of a previous time instance), to a gate (i.e. the "gating module" referred to above). Thus, the encoded representations of the sensor data herein constitute the pre-processed representations of the sensor data, fed to the gating module.

The gating module is able to route the pre-processed representations of the sensor data and the previous fusion state to a plurality of fusion experts (herein represented by "Fusion expert 1", "Fusion expert 2", to "Fusion expert N"). The arrows (both solid and dashed) represents the possible ways that the gate can route said data. In the illustrative example however, dashed arrows are used to indicate routes which the gate does not select, and solid arrows indicate routes which the gate selects.

It is to be noted that the gating need not to use both the pre-processed representations of the sensor data, and the previous fusion state in its decision. For example, it may base the gating on either the pre-processed representations of the sensor data, or the previous fusion state. However, the gate may then still feed both the pre-processed representations of the sensor data, and the previous fusion state to the selected fusion experts.

The outputs of the selected fusion experts (in this example fusion expert 2 and fusion expert N) is then used to provide a new fusion state (i.e. the "updated fused world-view representation" as referred to above).

The new fusion state may be fed to a task-specific prediction network, which generates a task-specific output, i.e. a prediction.

Fig. 4B shows another example of the sensor processing model 400'. The model 400' of Fig. 4B differs from the model 400 in Fig. 4A in that the pre-processed representations of the sensor data, as fed to the gate and the selected subset of fusion experts are a pre-fused representation of the sensor data.

More specifically, the encoded representations of the sensor data, as output form the encoding networks, are processed through a pre-fusion network, configured to generate the pre-fused representations of the sensor data. The pre-fusion may comprise some light fusion steps, based on which the gating function can be applied. The fusion experts may then constitute simpler fusion networks, in comparison with the example shown in Fig. 4A.

As explained in the foregoing, the concept of MoEs can, in some of the embodiments of the disclosed technology, be implemented as part within the fusion network. In one such example, the fusion network may be formed by a transformer. The transformer may comprise a number of transformer layers. Each transformer layer may in turn comprise an attention module and a FeedForward Neural network (FFN). The attention module may be configured to perform both cross-attention and self-attention. The concept of MoE may then be employed as (part of) the FFN. Such an example is shown in Fig. 4C. One way of seeing it, is that the pre-fusion network, as described above, may be an instance of the fusion network as described previously. As another way of seeing it, the pre-processed representation of the sensor data as referred to above, may be the output of a previous transformer layer, and that the steps described in connection with Fig. 1A-E, is what happens in the next transformer layer. Thus, the techniques described herein may be repeated (i.e. performed iteratively) to generate the updated fused world-view representation. This is illustrated by way of example in Fig. 4C.

Fig. 4C shows yet another example of the sensor processing model 400". In this example, the fusion network comprises a number of transformer layers, or fusion layers 1 to N as shown herein. The fusion layers may be arranged in a sequence, such that the output of one fusion layer is fed as input to the next. Fig. 4C shows an example of an architecture of one such fusion layer. It is to be noted that the fusion layers may have the same or different architectures. However, at least one of the fusion layers employs the concept of MoEs as described herein. The illustrated fusion layer is such a fusion layer.

The first fusion layer in the sequence of fusion layers may receive as input the encoded sensor data from the encoding network(s), as well as the previous fusion state. This fusion layer then outputs a partially updated fusion state (i.e. referring to the partially updated fused world-view representation), which can be fed to the next fusion layer in the sequence. In a subsequent fusion layer, the input will be the partially updated fusion state, as well as the encoded sensor data and the previous fusion state. The final fusion layer of the sequence then outputs the new fusion state (i.e. the updated fused world-view representation).

Looking specifically at the fusion layer that is illustrated in Fig. 4C, and which employs a plurality of fusion experts. In this case, the pre-processed representation of the sensor data that is fed to the gating module is the output from an attention module of the fusion layer, referred to in the following as an attended representation of the sensor data. The attended representation of the sensor data may be generated by applying cross-attention and/or self-attention with the partially updated fused world-view representation (i.e. the output of the previous fusion layer (may also be referred to as pre-fusion network in this context), the one or more encoded representations of the sensor data and the previous fusion state. Similar to the examples of Fig. 4A and 4B, the gate then routes the pre-processed representation of the sensor data to the selected subset of fusion experts. The output of the fusion layer can either be fed to the next fusion layer of the sequence, or be provided as the new fusion state.

It is to be noted that the architecture of the fusion layer(s) may be implemented differently as well. For example, the attention module may be divided into two separate modules. One module performing cross-attention, and another one performing self-attention. Moreover, more than one FFN may be employed. One or more of said FFNs may employ fusion experts.

In conclusion, the example of Fig. 4C shows how fusion experts can be employed within a transformer-based fusion network. It is to be noted that the principles of how to employ fusion experts within transformer-based fusion network can also be applied to transformed-based prediction network as well, such as in the example described below in connection with fig. 6.

Figure 5 illustrates another example of how the disclosed technology can be realized as part of the encoding process of the sensor processing model 500. More specifically, it shows an example where expert gating is employed within the encoding network.

Similar to the examples above, the input to the model 500 is sensor data from one or more sensors. In the present example, the sensor data of each sensor is fed to a respective encoding network. However, as explained above, the same encoding network may e.g. be used for several sensor data types.

Looking e.g. at the upper part of Fig. 5, the sensor data of Sensor 1 is fed to a pre-encoder of the encoding network. The pre-encoder is configured to perform some form of pre-encoding, to generate pre-encoded representations of the sensor data.

The pre-encoded representation of the sensor data may then be fed to the gate (i.e. corresponding to the encoder gating module, as referred to above). Similar to the examples in Fig. 4A-4C, the gate may route its input to a selected subset of experts, in this case one or more of the encoder experts denoted Encoder expert 1 to Encoder expert N.

The outputs of the encoder experts may then be fed to a fusion network, together with a previous fusion state. Even though it is illustrated that the outputs of the encoder experts are all fed individually to the fusion networks, they may also be combined in some way prior to being fed to the fusion network. For example, the outputs of the encoder experts of one of the encoding networks (e.g. the one associated with Sensor 1) may be formed into one encoded representation of the sensor data before being fed to the Fusion Network. Similarly, the outputs of the encoder experts of another of the encoding networks (e.g. the one associated with Sensor N) may be formed into another encoded representation of the sensor data before being fed to the Fusion Network.

The Fusion network then generates a new fusion state, which in turn can be fed to a task-specific prediction network, configured to generate a prediction output.

It goes without saying that the principles of the encoder experts as presented here in connection with Fig. 5, can be implemented in the encoding networks in any of Fig. 4A to 4C. Similarly, the principles of the fusion experts as presented in connection with Fig. 4A to 4C can be implemented in the Fusion Network in the present example of Fig. 5. Thus, expert gating can be employed in both the encoding process and the fusion process of the sensor processing pipeline.

Lastly, Fig. 6 illustrates an example where the principles on which the disclosed technology is based, is applied in the prediction process of the sensor processing model 600. More specifically, it shows an example where expert gating is employed within the prediction network.

Similar to the examples above, sensor data from one or more sensors (Sensor 1 to Sensor N) are processed through encoding network(s). Encoded representations can then be processed together with a previous fusion state, through a Fusion Network, to generate a new fusion state.

The new fusion state may then be fed to a prediction gating module (denoted Gate in the figure). The gating module then routes the new fusion state to a selected subset of prediction experts of a plurality of prediction experts (Prediction expert 1 to Prediction expert N), which makes up the prediction network.

The outputs of the selected subset of prediction experts may then be used to generate the prediction output. This may be done by feeding the outputs of the selected subset of prediction experts to a post-prediction network, which is configured to generate the final prediction output. The post-prediction network may e.g. output bounding boxes, planned trajectories, or object classifications. Thus, the prediction experts may be employed as part of the prediction network. The post-prediction network may be configured differently depending on the downstream task for which it is configured to output. In image classification for instance, the post-prediction network may be configured to determine an average of the class probabilities outputted from each prediction expert. In trajectory planning/prediction, where each prediction experts outputs a respective trajectory with an associated score, the post-prediction network may be configured to apply a softmax to the scores to output a selected trajectory.

Similar to the above, the principles of predictions experts as shown in Fig. 6, can be applied to the prediction networks in the examples of Fig. 4A to 4C and Fig. 5. Correspondingly, the principles of encoding experts of Fig. 5 and fusion experts of Fig. 4A to 4C can be applied to the model 600 of Fig. 6.

As realized by the person skilled in the art, the above examples are merely to be seen as a few non-limiting examples. Modifications to these examples can be made, without departing from the disclosed technology.

Figure 7 illustrates a schematic flowchart representation of a computer-implemented method 700 for processing sensor data in a vehicle equipped with an automated driving system (ADS). In some embodiments, the method 700 may be a seen as a method 700 for sensor data encoding. The method 700 may be performed in the vehicle (i.e. by computing resources of the vehicle), such as the vehicle 300 as described above in connection with Fig. 3. More specifically, the method 700 may be performed as part of the ADS.

Below, the different steps of the method 700 are described in more detail. Even though illustrated in a specific order, the steps of the method 700 may be performed in any suitable order as well as multiple times. Thus, although Fig. 1 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the disclosed technology. Likewise, software implementations could be accomplished with standard programming techniques with rule-based logic and other logic to accomplish the various steps. Further variants of the method 700 will become apparent from the present disclosure. The herein mentioned and described embodiments are only given as examples and should not be limiting to the present disclosed technology. Other solutions, uses, objectives, and functions within the scope of the disclosed technology as claimed below described patent claims should be apparent for the person skilled in the art.

It should further be appreciated that the method 700 of Fig. 1 comprises some steps which are illustrated as boxes in solid lines and some steps which are illustrated in dashed lines. The steps which are shown in solid lines are steps which are comprised in the broadest example embodiment of the method 700. The steps which are comprised in dashed lines are examples of a number of optional steps which may form part of a number of alternative embodiments. It should be appreciated that the optional steps need not be performed in order. Furthermore, it should be appreciated that not all of the optional steps need to be performed. The optional steps may be performed in any order and in any combination.

Some example embodiments of the method 700 for processing sensor data in a vehicle equipped with an automated driving system, are set out in the following items.
Item 1. A computer-implemented method 700 for processing sensor data in a vehicle equipped with an automated driving system, the method 700 comprising:
   obtaining S702 sensor data pertaining to a surrounding environment of the vehicle at a current time instance, wherein the sensor data comprises sensor data associated with one or more sensors of the vehicle;
   obtaining S704 an encoding network comprising a pre-encoder and a plurality of encoder experts, wherein the encoder experts of the plurality of encoder experts differ from each other in one or more aspects;
   for each sensor of the one or more sensors:
      processing S706 the sensor data associated with said sensor through the pre-encoder, thereby generating a pre-encoded representation of the sensor data;
      processing S708 the pre-encoded representation of the sensor data as input to an encoder gating module, to generate a selected subset of encoder experts from the plurality of encoder experts based on an output of the expert gating module;
      processing S710 the pre-encoded representation of the sensor data through each encoder expert of the selected subset of encoder experts, to generate a respective output; and
      providing S712 an encoded representation of the sensor data based on the outputs of the subset of encoder experts.
Item 2. The method 700 according to item 1, further comprising processing S714 the one or more encoded representations of the sensor data associated with each of the one or more sensors, together with a fused world-view representation of a previous time instance, through a fusion network, to generate an updated fused world-view representation.
Item 3. The method 700 according to item 2, wherein the fusion network comprises a plurality of fusion experts; and
   wherein processing S714 the encoded representations of the sensor data associated with each of the one or more sensors, together with the fused world-view representation of the previous time instance, comprises:
   processing the encoded representations of the sensor data and/or the fused world-view representation for the previous time instance as input to a fusion gating module, to generate a selected subset of fusion experts from the plurality of fusion experts based on an output of the fusion gating module;
   processing the encoded representations of the sensor data together with the fused world-view representation of the previous time instance through each fusion expert of the selected subset of fusion experts, to generate a respective output; and
   providing the updated fused world-view representation for the current time instance based on the outputs of the subset of fusion experts.
Item 4. The method 700 according to item 2 or 3, further comprising generating S716 a task-specific output by processing the updated fused world-view representation through a task-specific prediction network configured to generate the task-specific output.
Item 5. The method 700 according to item 4, wherein the task-specific prediction network comprises a plurality of prediction experts, and
   wherein generating S716 the task-specific output comprises:
   determining a selected subset of prediction experts from the plurality of prediction experts, using a prediction gating module;
   processing the updated fused world-view representation through each prediction expert of the subset of prediction experts, to generate a respective output; and
   providing the task-specific output based on the outputs of the subset of prediction experts.
Item 6. The method 700 according to any one of the items 1 to 5, wherein the plurality of encoder experts is a mixture-of-experts.
Item 7. The method 700 according to any one of the items 1 to 6, wherein the encoder gating module is configured to apply a learned gating function to the input, to generate the output.
Item 8. The method 700 according to any one of the items 1 to 6, wherein the encoder gating module is configured to apply a deterministic gating function to the input, to generate the output.
Item 9. The method 700 according to any one of the items 1 to 8, wherein the encoder gating module is configured to generate the selected subset of encoder experts by:
   determining a ranking score of each of the plurality of encoder experts based on the input,
   selecting a top k subset of encoder experts based on the determined ranking scores, where k is a positive integer larger than 0, and less than the number of encoder experts of the plurality of encoder experts; and
   providing the selected top k subset of encoder experts as the output.
Item 10. The method 700 according to item 9, wherein selecting the top k subset of encoder experts is further based on meta data associated with one or more environmental conditions associated with the surrounding environment.
Item 11. The method 700 according to item 9 or 10, wherein selecting the top k subset of encoder experts is further based on a subset of encoder experts used to provide the fused world-view representation of the previous time instance.

It is to be noted that any features, principles or advantages associated with the method 100 described above in connection with Fig. 1A to 1D are applicable also to the method 700 described in connection with Fig. 7, and vice versa.

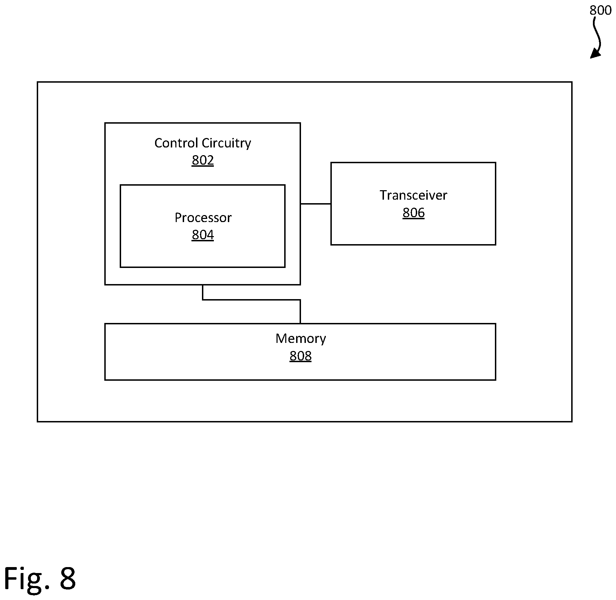

Figure 8 is a schematic illustration of a computing device 800, in accordance with some embodiments of the disclosed technology. The computing device 800 may be configured to perform the method 700 as described in connection with Fig. 7. Thus, the computing device 800 may be a computing device 800 for processing sensor data in a vehicle equipped with an automated driving system.

The computing device 800 as described herein, refers to a computer system, or any device or general computing system configured to perform various functions. Even though the computing device 800 is herein illustrated as one device, the computing device 800 may be a distributed computing system, formed by a number of different devices. The computing device 800 may be provided as part of a vehicle 300, such as the vehicle 300 as described above in connection with Fig. 3.

The computing device 800 comprises control circuitry 802. The control circuitry 802 may physically comprise one single circuitry device. Alternatively, the control circuitry 802 may be distributed over several circuitry devices.

As shown in the example of Fig. 8, the computing device 800 may further comprise a transceiver 806 and a memory 808. The control circuitry 802 being communicatively connected to the transceiver 806 and the memory 808. The control circuitry 802 may comprise a data bus, and the control circuitry 802 may communicate with the transceiver 806 and/or the memory 808 via the data bus.

The control circuitry 802 may be configured to carry out overall control of functions and operations of the computing device 800. The control circuitry 802 may include a processor 804, such as a central processing unit (CPU), microcontroller, or microprocessor. The processor 804 may be configured to execute program code stored in the memory 808, in order to carry out functions and operations of the computing device 800. The control circuitry 802 is configured to perform the steps of the method 700 as described above in connection with Fig. 7. The steps may be implemented in one or more functions stored in the memory 808.

The transceiver 806 is configured to enable the computing device 800 to communicate with other entities, such as other devices. The transceiver 806 may both transmit data from and receive data to the computing device 800. The computing device 800 may e.g. be part of a vehicle. The transceiver 806 may then allow the computing device 800 to communicate with other systems of the vehicle, or with external entities, such as other vehicles, or a remote server.

The memory 808 may be a non-transitory computer-readable storage medium. The memory 808 may be one or more of a buffer, a flash memory, a hard drive, a removable media, a volatile memory, a non-volatile memory, a random access memory (RAM), or another suitable device. In a typical arrangement, the memory 808 may include a non-volatile memory for long-term data storage and a volatile memory that functions as system memory for the computing device 800. The memory 808 may exchange data with the circuitry 802 over the data bus. Accompanying control lines and an address bus between the memory 808 and the circuitry 802 also may be present.

Functions and operations of the computing device 800 may be implemented in the form of executable logic routines (e.g., lines of code, software programs, etc.) that are stored on a non-transitory computer readable recording medium (e.g., the memory 808) of the computing device 800 and are executed by the circuitry 802 (e.g., using the processor 804). Put differently, when it is stated that the circuitry 802 is configured to execute a specific function, the processor 804 of the circuitry 802 may be configured execute program code portions stored on the memory 808, wherein the stored program code portions correspond to the specific function. Furthermore, the functions and operations of the circuitry 802 may be a stand-alone software application or form a part of a software application that carries out additional tasks related to the circuitry 802. The described functions and operations may be considered a method that the corresponding device is configured to carry out, such as the method 700 discussed above in connection with Fig. 7. In addition, while the described functions and operations may be implemented in software, such functionality may as well be carried out via dedicated hardware or firmware, or some combination of one or more of hardware, firmware, and software. In the following, the function and operations of the computing device 800 is described.

Some example embodiments of the computing device 800 for processing sensor data in a vehicle equipped with an automated driving system, are set out in the following items.
Item 12. A computing device 800 for processing sensor data in a vehicle equipped with an automated driving system, the computing device 800 comprising control circuitry 802 configured to:
   obtain sensor data pertaining to a surrounding environment of the vehicle at a current time instance, wherein the sensor data comprises sensor data associated with one or more sensors of the vehicle;
   obtain an encoding network comprising a pre-encoder and a plurality of encoder experts, wherein the encoder experts of the plurality of encoder experts differ from each other in one or more aspects;
   for each sensor of the one or more sensors:
      process the sensor data associated with said sensor through the pre-encoder, thereby generating a pre-encoded representation of the sensor data;
      process the pre-encoded representation of the sensor data as input to an encoder gating module, to generate a selected subset of encoder experts from the plurality of encoder experts based on an output of the expert gating module;
      process the pre-encoded representation of the sensor data through each encoder expert of the selected subset of encoder experts, to generate a respective output; and
      provide an encoded representation of the sensor data based on the outputs of the subset of encoder experts.
Item 13. The computing device 800 according to item 12, wherein the control circuitry 802 is further configured to process the one or more encoded representations of the sensor data associated with each of the one or more sensors, together with a fused world-view representation of a previous time instance, through a fusion network, to generate an updated fused world-view representation.
Item 14. The computing device 800 according to item 13, wherein the control circuitry 802 is further configured to generate a task-specific output by processing the updated fused world-view representation through a task-specific prediction network configured to generate the task-specific output.

It should be further noted that the principles, features, aspects, and advantages of the method 700 as described above in connection with Fig. 7, are applicable also to the computing device 800 as described herein. In order to avoid undue repetition, reference is made to the above. Moreover, any features, principles or advantages associated with the computing device 200 described above in connection with Fig. 2 are applicable also to the computing device 800 described in connection with Fig. 8, and vice versa.

The disclosed technology has been presented above with reference to specific embodiments. However, other embodiments than the above described are possible and within the scope of the disclosed technology. Different method steps than those described above, performing the methods by hardware or software, may be provided within the scope of the disclosed technology. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the disclosed technology may be at least in part implemented by means of both hardware and software, and that the same item of hardware may represent several "means" or "units".

## Claims

1. A computer-implemented method (100) for processing sensor data in a vehicle equipped with an automated driving system, the method (100) comprising:
obtaining (S106) one or more pre-processed representation of sensor data pertaining to a surrounding environment of the vehicle at a current time instance, wherein the sensor data comprises sensor data associated with one or more sensors of the vehicle;
obtaining (S108) a plurality of fusion experts, wherein the fusion experts of the plurality of fusion experts differ from each other in one or more aspects;
processing (S110) the one or more pre-processed representations of the sensor data and/or a fused world-view representation for a previous time instance as input to a fusion gating module, to generate a selected subset of fusion experts from the plurality of fusion experts based on an output of the fusion gating module;
processing (S112) the pre-processed representations of the sensor data together with the fused world-view representation of the previous time instance through each fusion expert of the selected subset of fusion experts, to generate a respective output; and
providing (S114) an updated fused world-view representation for the current time instance based on the outputs of the subset of fusion experts.

2. The method according to claim 1, wherein the pre-processed representation of the sensor data is an encoded representation of the sensor data, generated by processing said sensor data through an encoding network.

3. The method according to claim 1, wherein the pre-processed representation of the sensor data is a pre-fused representation of the sensor data, generated by processing said sensor data through a pre-fusion network.

4. The method according to any one of the claims 1 to 3, wherein the pre-processed representation of the sensor data is an attended representation of the sensor data, generated by applying cross-attention and/or self-attention with a partially updated fused world-view representation, one or more encoded representations of the sensor data and the fused world-view representation of the previous time instance,
wherein the partially updated fused world-view representation is obtained from a pre-fusion network.

5. The method according to any one of the claims 1 to 4, wherein providing (S114) the updated fused world-view representation comprises:
processing (S114a) the output of each fusion expert of the selected subset of fusion experts though a post-fusion network configured to generate the updated fused world-view representation, or
combining (S114b) the outputs of each fusion expert of the selected subset of fusion experts into the updated fused world-view representation.

6. The method (100) according to any one of the claims 1 to 5, wherein the plurality of fusion experts is a mixture-of-experts.

7. The method (100) according to any one of the claims 1 to 6, wherein the fusion gating module is configured to apply a learned gating function to the input, to generate the output.

8. The method (100) according to any one of the claims 1 to 6, wherein the fusion gating module is configured to apply a deterministic gating function to the input, to generate the output.

9. The method (100) according to any one of the claims 1 to 8, wherein the fusion gating module is configured to generate the selected subset of fusion experts by:
determining (S110a) a ranking score of each of the plurality of fusion experts based on the input,
selecting (S110b) a top k subset of fusion experts based on the determined ranking scores, where k is a positive integer larger than 0, and less than the number of fusion experts of the plurality of fusion experts; and
providing (S110c) the selected top k subset of fusion experts as the output.

10. The method (100) according to claim 9, wherein selecting (S110b) the top k subset of fusions experts is further based on meta data associated with one or more environmental conditions associated with the surrounding environment.

11. The method (100) according to claim 9 or 10, wherein selecting (S110b) the top k subset of fusion experts is further based on a subset of fusion experts used to provide the fused world-view representation of the previous time instance.

12. The method (100) according to any one of the claims 1 to 11, further comprising:
obtaining (S102) the sensor data pertaining to the surrounding environment of the vehicle at the current time instance; and
encoding (S104) the sensor data associated with each of the one or more sensors, by processing said sensor data through an encoding network, thereby generating an encoded representation of the sensor data associated with each of the one or more sensors;
wherein the encoding network comprises a pre-encoder and a plurality of encoder experts; and
wherein processing the sensor data associated with each of the one or more sensors through the encoding network comprises, for each of the one or more sensors:
processing (S104a) the sensor data associated with said sensor through the pre-encoder, thereby generating a pre-encoded representation of the sensor data;
determining (S104b) a selected subset of encoder experts from the plurality of encoder experts, using an encoder gating module;
processing (S104c) the pre-encoded representation of the sensor data through each encoder expert of the subset of encoder experts, to generate a respective output; and
providing (S104d) the encoded representation of the sensor data based on the outputs of the subset of encoder experts.

13. The method (100) according to any one of the claims 1 to 12, further comprising generating (S116) a task-specific output by processing the updated fused world-view representation through a task-specific prediction network configured to generate the task specific output; wherein the task-specific prediction network comprises a plurality of prediction experts, and wherein generating (S116) the task-specific output comprises:
determining (S116a) a selected subset of prediction experts from the plurality of prediction experts, using a prediction gating module;
processing (S116b) the updated fused world-view representation through each prediction expert of the subset of prediction experts, to generate a respective output; and
providing (S116c) the task-specific output based on the outputs of the subset of prediction experts.

14. A computer program product comprising instructions, which when the program is executed by a computing device, causes the computing device to carry out the method (100) according to any one of the claims 1 to 13.

15. A computing device (200) for processing sensor data in a vehicle equipped with an automated driving system, the computing device (200) comprising control circuitry (202) configured to:
obtain one or more pre-processed representation of sensor data pertaining to a surrounding environment of the vehicle at a current time instance, wherein the sensor data comprises sensor data associated with one or more sensors of the vehicle;
obtain a plurality of fusion experts, wherein the fusion experts of the plurality of fusion experts differ from each other in one or more aspects;
process the one or more pre-processed representations of the sensor data and/or a fused world-view representation for a previous time instance as input to a fusion gating module, to generate a selected subset of fusion experts from the plurality of fusion experts based on an output of the fusion gating module;
process the pre-processed representations of the sensor data together with the fused world-view representation of the previous time instance through each fusion expert of the selected subset of fusion experts, to generate a respective output; and
provide an updated fused world-view representation for the current time instance based on the outputs of the subset of fusion experts.
